# NOUVEAU FASCICULE DE BREVET EUROPEEN

(11) **EP 2 467 024 B2**
(45) Date de publication et mention de la décision concernant l'opposition: **17.01.2024**
(45) Mention de la délivrance du brevet: 13.08.2014
(21) Numéro de dépôt: 10760039.7
(22) Date de dépôt: 02.09.2010
(51) Int. Cl.: A21D 8/04, A21D 10/02, A21D 10/00

(54) **PATE BOULANGERE FERMENTEE TOLERANTE A L'APPRET**
GÄRUNGSTOLERANTER FERMENTIERTER BACKTEIG
FERMENTED BAKERY DOUGH TOLERANT TO PROOFING

(30) Priorité: 17.08.2009 FR 0903986
(43) Date de publication de la demande: 27.06.2012
(73) Titulaire: Lesaffre et Compagnie, 75001 Paris (FR)
(72) Inventeur: BARTOLUCCI, Jean-Charles, F-59350 St Andre Lez Lille (FR)
(74) Mandataire: Bandpay & Greuter
(86) Numéro de dépôt international: PCT/IB2010/053957
(87) Numéro de publication internationale: WO 2011/027317

(56) Documents cités:
- EP-A1- 0 636 692
- EP-A1- 0 903 082
- EP-A1- 1 808 074
- EP-A2- 0 078 182
- WO-A2-2009/097333
- FR-A1- 2 777 424
- GB-A- 2 139 473
- US-A- 5 639 496

## Description

L'invention se rapporte à l'utilisation d'une levure pour stabiliser la fermentation panaire lors de la phase d'apprêt d'une pâte boulangère, à une composition de pâte boulangère comprenant cette levure, et à un procédé de préparation d'un produit cuit ou frais à partir de la composition de pâte boulangère.

Traditionnellement, la fermentation panaire démarre lorsque la levure est mise en contact avec la farine et l'eau, et se poursuit jusqu'aux premières minutes de la cuisson.

Le cycle de fermentation panaire comprend plusieurs phases séparées par des opérations manuelles ou mécaniques. Ces différentes phases de fermentation sont les suivantes : le pointage, la détente et l'apprêt. La durée de ces différentes phases peut varier en fonction de la méthode de pétrissage et/ou de fermentation utilisée.

La phase de pointage (première fermentation) suit l'étape de pétrissage de la pâte, et a pour but de laisser à la levure le temps nécessaire pour s'adapter au milieu, et produire, d'une part, le gaz carbonique indispensable à la levée de la pâte, et d'autre part, l'alcool éthylique ainsi qu'un certain nombre d'autres produits de dégradation des sucres.

Cette phase de pointage est suivie par des opérations mécaniques, puis par la phase de détente (seconde fermentation) qui permet à la pâte de se relaxer avant d'être façonnée en pâtons.

La phase d'apprêt (dernière phase de fermentation) suit l'étape de façonnage et précède la mise au four. Cette phase d'apprêt permet l'optimisation du développement de la pâte avant sa mise au four. Les pâtons façonnés précédemment vont se développer grâce à la poussée gazeuse.

Au cours de l'apprêt, il se produit une poussée gazeuse liée principalement à la fermentation du maltose provenant de l'amidon de la farine. Cette poussée gazeuse entraîne l'apparition d'une structure alvéolée à base de gluten ainsi que la diffusion et la conservation du gaz carbonique dans cette structure, stabilisant ainsi les pâtons avant leur cuisson.

En effet, la tenue physique des pâtons repose à la fois sur l'activité fermentaire pendant l'apprêt et sur l'état de la structure à base de gluten. Si la pression du gaz à l'intérieur des pâtons est forte mais que la paroi des bulles formées au sein de la pâte est devenue poreuse, le développement se fait mal. Si inversement, le gluten conserve une bonne extensibilité et reste imperméable, les pâtons peuvent subir un apprêt de longue durée à condition que la fermentation soit encore assez active.

La durée de l'apprêt dépend du compromis expliqué précédemment, et il peut être préférable de l'écourter pour garder au pâton de meilleures possibilités de développement au four.

Ceci revient à estimer la maturité d'une pâte à l'enfournement en fonction de son activité fermentaire et de cette rétention gazeuse : c'est la notion de tolérance.

Toutes les espèces de levures ne présentent pas la même aptitude à fermenter le maltose pendant la phase d'apprêt. Elles n'ont donc pas le même comportement pendant l'apprêt.

En effet, selon la nature des enzymes présentes dans la levure, la fermentation du maltose par la levure existe, et est effectuée plus ou moins rapidement, et de manière plus ou moins importante.

Le pouvoir fermentaire de la levure vis-à-vis du maltose peut influencer la tolérance, et donc la durée de l'apprêt.

Il est par ailleurs connu de la demande de brevet EP 0 078182A2 une composition de pâte boulangère comprenant une levure résistante à l'alcool, telle que *Saccharomyces chevalieri* et conservant son activité fermentaire au froid.

Mais ce document ne décrit ni l'utilisation ni le comportement de cette souche de levure pendant la phase d'apprêt.

Les documents FR 2 777 424, EP 0 078 182, GB 2 139 473, EP 0 903 082, EP 0 636 692 décrivent une composition de pâte comprenant une levure S. *chevalieri* et des améliorants de boulangerie et un procédé de fabrication d'un produit cuit à partir de cette composition.

US 5 639 496 décrit une composition de pâte comprenant une levure S. *boulardii* et du glucose.

EP 1808 074 écrit l'utilisation de la levure *S.bayanus* pour stabiliser la fermentation lors de la phase d'apprêt d'une pâte boulangère fermentée.

Aussi il subsiste le besoin de pouvoir disposer d'une levure qui permet d'éviter une poussée gazeuse, lors de la phase d'apprêt, trop rapide, trop importante en intensité, trop longue, évitant ainsi de fragiliser la structure de la pâte lorsque la fermentation est effectuée dans des conditions de préparation standard.

L'invention a donc pour objet l'utilisation de la levure *Saccharomyces cerevisiae var. boulardii* ou utilisation de la levure *Saccharomyces chevalieri* et de la levure *Saccharomyces cerevisia var. boulardii* pour stabiliser la fermentation panaire lors de la phase d'apprêt d'une pâte boulangère fermentée.

L'utilisation selon l'invention présente l'avantage de permettre un meilleur contrôle, à température ambiante, de la fermentation pendant la phase d'apprêt, et par conséquent de permettre une conservation de la pâte fermentée plus facile, ne nécessitant pas de précuisson et/ou de refroidissement pour arrêter ou ralentir cette fermentation qui, avec l'utilisation de levure habituellement utilisée en fermentation panaire, continue naturellement.

Un autre objet de l'invention est une composition de pâte boulangère comprenant une levure *Saccharomyce chevalieri* et *Saccharomyces cerevisiae var. boulardii* et au moins un améliorant de boulangerie choisi parmi les enzymes de boulangerie, les agents d'oxydation, les émulsifiants, les matières grasses, les agents réducteurs, les sucres fermentescibles classiquement utilisés en boulangerie.

L'invention a encore pour objet un procédé de préparation d'un produit cuit ou frit à partir d'une composition de pâte boulangère telle que mentionnée précédemment.

Ce procédé consiste à :
- former une pâte en mélangeant la farine, l'eau, la levure, éventuellement au moins un améliorant de boulangerie choisi parmi les enzymes de boulangerie, les agents d'oxydation, les émulsifiants, les matières grasses, les agents réducteurs, les sucres fermentescibles, et entre 0,5% et 10% en poids de levure *Saccharomyces cerevisiae var. boulardii* et *Saccharomyces chevalieri.*
- à faire fermenter la composition de pâte boulangère à une température comprise entre 15° et 45°C pour obtenir une pâte fermentée ayant un volume spécifique d'au moins 1 ml/g, et
- faire cuire ou refroidir la composition fermentée.

La levure *Saccharomyces chevalieri* est de préférence celle obtenue à partir de la souche *Saccharomyces chevalieri* déposée auprès de la collection « National Collection of Yeast Cultures » sous la référence NCYC 935. La levure *Saccharomyces cerevisiae var. boulardii* est de préférence celle obtenue à partir de la souche *Saccharomyces cerevisiae var. boulardii* déposée auprès de la Collection Nationale de Cultures de Microorganismes sous la référence CNCM 1-3799 le 21 août 2007.

La composition selon l'invention peut comprendre une levure *Saccharomyces bayanus.*

La composition selon l'invention comprend de préférence de la levure en une quantité comprise entre 0,5 et 10% en poids, et de préférence de 0,5 à 3% en poids par rapport au poids total de la composition.

La levure peut se présenter sous forme sèche instantanée ou sèche active.

Dans la composition selon l'invention, l'améliorant peut être présent en une quantité comprise entre 0,5 et 5% en poids, et de préférence entre 1 et 3% en poids par rapport au poids total de la composition.

La composition peut, selon une forme préférée, comprendre au moins un sucre fermentescible en une quantité allant entre 0 et 3% en poids, et de préférence entre 0 et 2% en poids par rapport au poids total de la composition.

De manière préférée, la pâte boulangère fermentée obtenue selon l'invention peut avoir un volume spécifique d'au moins 1 ml/g.

De préférence, la levure est présente dans la composition en une quantité d'au moins 10⁶ cellules par gramme de composition.

Dans le procédé selon l'invention, la levure peut être incorporée dans la pâte à une concentration d'au moins 10⁶ cellules par gramme de composition de pâte.

Le procédé selon l'invention peut comprendre en outre de la levure *Saccharomyces bayanus.*

L'utilisation de la levure *Saccharomyces chevalieri,* du fait de la bonne stabilité qu'elle confère à la composition de pâte boulangère, évite que la fermentation ne recommence lorsque la pâte est retirée du froid.

L'invention va maintenant être décrite de manière plus détaillée à l'aide des exemples et des figures qui suivent, donnés uniquement à titre d'illustration, et qui ne sont nullement limitatifs, et dans lesquels :
- la figure 1 représente l'évolution du volume spécifique (VS) du pain comprenant 1 % d'améliorant, en fonction du temps, pendant la phase d'apprêt, à une température d'environ 35°C,
- la figure 2 représente l'évolution du volume spécifique (VS) du pain comprenant 3% d'améliorant, en fonction du temps, pendant la phase d'apprêt, à une température d'environ 35°C,
- la figure 3 représente le profil fermentaire obtenu en mesurant la vitesse de dégagement gazeux liée à la fermentation en fonction du temps, pendant la phase d'apprêt, sur pâte normale comprenant 1% d'améliorant, pour les levures *Saccharomyces cerevisiae var. chevalieri* et *Saccharomyces bayanus,* utilisées seules, comparées à une levure de boulangerie classique,
- la figure 4 est un modèle mathématique qui représente la mesure du cumul des vitesses de dégagement gazeux correspondant à la figure 3 au cours du temps,
- la figure 5 représente le profil fermentaire obtenu en mesurant la vitesse de dégagement gazeux liée à la fermentation en fonction du temps, pendant la phase d'apprêt, sur pâte normale comprenant 3% d'améliorant, pour les levures *Saccharomyces cerevisiae var. chevalieri* et *Saccharomyces bayanus,* utilisées seules, comparées à une levure de boulangerie classique,
- la figure 6 est un modèle mathématique qui représente la mesure du cumul des vitesses de dégagement gazeux correspondant à la figure 5 au cours du temps,
- la figure 7 représente le profil fermentaire, sur 3 jours à 30°C sur pâte normale, obtenu en mesurant la vitesse de dégagement gazeux liée à la fermentation en fonction du temps, pendant la phase d'apprêt, sur pâte normale comprenant 1% d'améliorant, pour les levures *Saccharomyces chevalieri, Saccharomyces var. boulardii* et *Saccharomyces bayanus,* utilisées seules, comparées à une levure de boulangerie classique,
- la figure 8 est un modèle mathématique qui représente la mesure du cumul des vitesses de dégagement gazeux correspondant à la figure 7 au cours du temps.

| **EXEMPLE Ingrédient** | **Composition pour pâte boulangère Concentration** |
|---|---|
| Farine de blé | 100% |
| Eau | 65% |
| Matière grasse | 2% |
| Sel | 2% |
| Levure | 2% |
| Améliorant | 1 ou 3% selon les cas |

Les proportions des constituants sont données en pourcentage en poids par rapport au pourcentage en farine qui sert de référence.

Cette composition est préparée en mélangeant, de manière connue, l'ensemble des constituants tout d'abord à une vitesse lente puis à une vitesse rapide à une température d'environ 24°C. La pâte est laissée au repos environ 15 minutes avant d'être divisée en pâtons d'environ 250 g, puis mise dans des moules. On laisse la pâte levée à une température d'environ 35°C et une humidité de 75% pendant 1 à 8 heures. Après fermentation, les pâtons sont scarifiés puis cuits au four pendant environ 25 minutes à 215°C en leur vaporisant régulièrement de la vapeur d'eau.

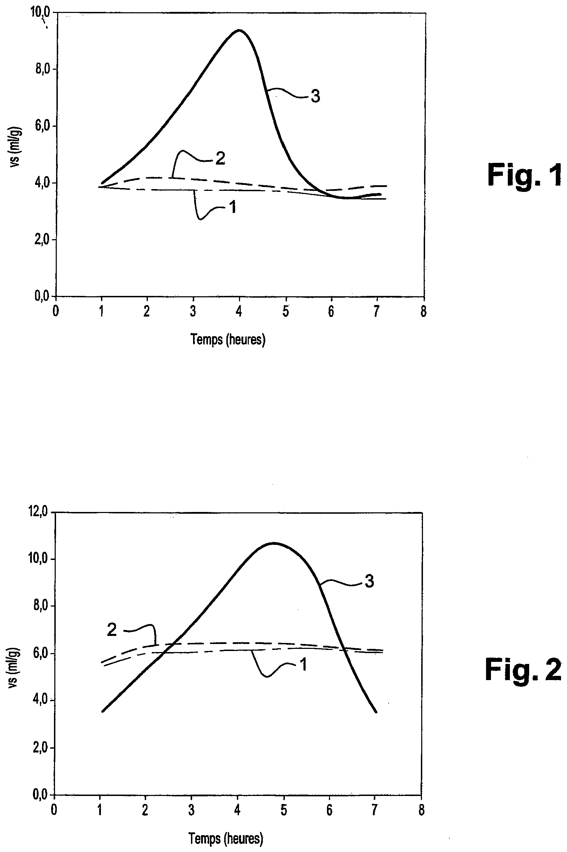

Comme on peut le voir sur les figures 1 et 2, les pains produits à l'aide des levures *Saccharomyces chevalieri* de référence 1 et *Saccharomyces bayanus* de référence 2, en comparaison avec une levure utilisée classiquement en panification de référence 3, ont un volume spécifique quasiment constant pendant une durée allant de 1 à 7 heures d'apprêt ; ce qui n'est pas le cas avec la levure de référence 3 pour laquelle le volume augmente de manière continue au cours du temps jusqu'à atteindre un seuil correspondant à un effondrement de la structure en gluten du pain.

Les pains produits à partir des levures de références 1 et 2 montrent une tolérance à l'apprêt intéressante dans la mesure où leur volume reste constant sur toute la durée de l'apprêt quelque soit la concentration en améliorant dans la pâte 1 % (figure 1) ou 3% (figure 2).

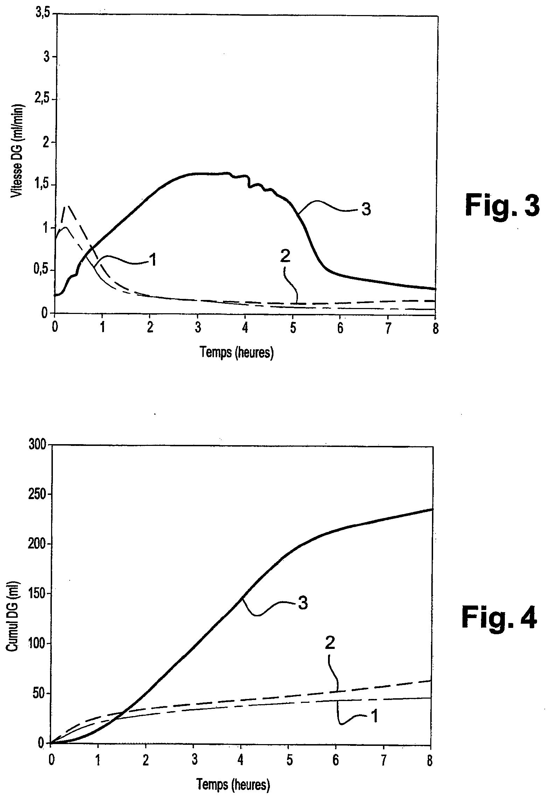

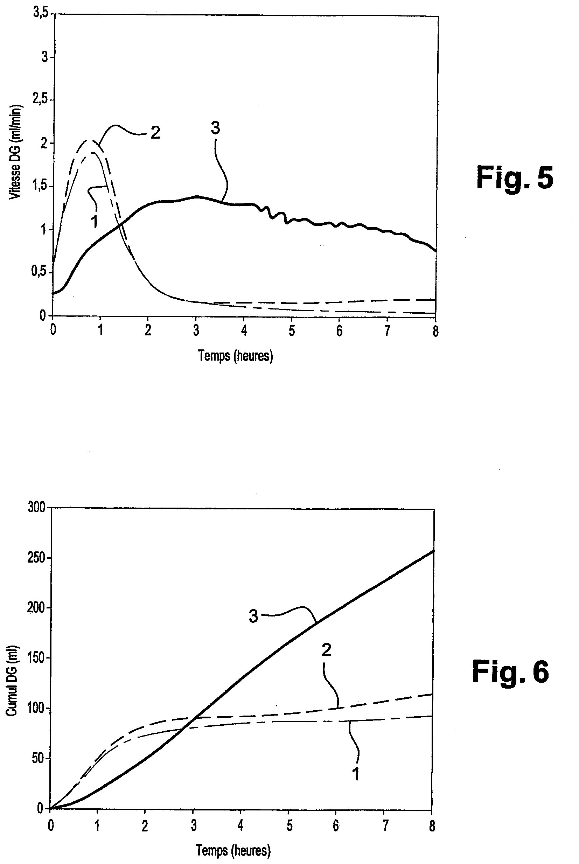

Sur les figures 3 à 6 le comportement des levures *Saccharomyces chevalieri* de référence 1, et *Saccharomyces bayanus* de référence 2 est comparé à celui d'une levure de référence 3 utilisée classiquement en panification pour une utilisation à une température de 30°C.

Sur ces figures, on voit que les levures selon l'invention (références 1 et 2) assimilent, en premier lieu et de manière importante, les sucres pré-existants disponibles de la farine (correspondant au pic de dégagement gazeux sur les deux premières heures) puis arrêtent leur activité lorsqu'elles se retrouvent uniquement en présence de maltose.

Ces figures montrent bien la stabilisation de la fermentation panaire de ces levures lors de la phase d'apprêt par la non assimilation du maltose ou sa très faible assimilation.

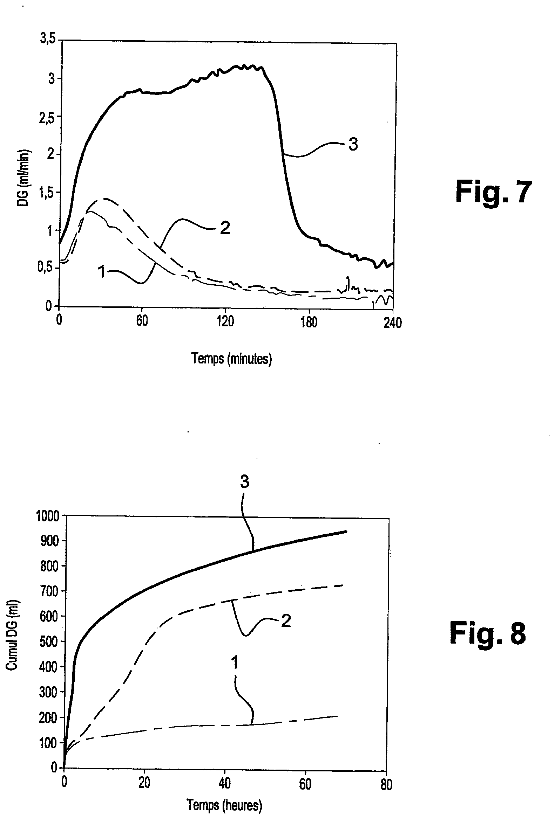

Sur les figures 7 et 8, le comportement des levures *Saccharomyces chevalieri* de référence 1, *Saccharomyces cerevisiae var.boulardii* de référence 2 et Saccharomyces bayanus est comparé à celui d'une levure de référence 3 utilisée classiquement en panification pour une utilisation à une température de 30°C.

Ces figures montrent un profil fermentaire particulièrement lent pour la levure de référence 2, traduisant un pic d'assimilation du maltose compris entre 15 et 20 heures en comparaison avec la levure de référence 3 qui montre un pic d'assimilation du maltose après environ 2 heures.

## Revendications

1. Utilisation de la levure *Saccharomyces cerevisiae var. boulardii* ou utilisation de la levure *Saccharomyces chevalieri* et de la levure *Saccharomyces cerevisiae var. boulardii* pour stabiliser la fermentation lors de la phase d'apprêt d'une pâte boulangère fermentée.

2. Utilisation selon la revendication 1, **caractérisée en ce que** la levure est obtenue à partir de la souche *Saccharomyces chevalieri* déposée auprès de la collection « National Collection of Yeast Cultures » sous la référence NCYC 935.

3. Utilisation selon la revendication 1, **caractérisée en ce que** la levure est obtenue à partir de la souche *Saccharomyces cerevisiae var. boulardii* déposée auprès de la Collection Nationale de Cultures de Microorganismes sous la référence CNCM I-3799 le 21 août 2007.

4. Utilisation selon la revendication 1, **caractérisée en ce qu'**elle comprend de la levure *Saccharomyces bayanus.*

5. Utilisation selon la revendication 1, **caractérisée en ce qu'**elle comprend au moins un améliorant de boulangerie choisi parmi les enzymes de boulangerie, les agents d'oxydation, les émulsifiants, les matières grasses, les agents réducteurs, les sucres fermentescibles.

6. Utilisation selon la revendication 1, **caractérisée en ce que** la levure se présente sous forme sèche instantanée ou sèche active.

7. Utilisation selon la revendication 1, **caractérisée en ce qu'**elle comprend en plus au moins un sucre fermentescible.

8. Composition de pâte boulangère comprenant une levure *Saccharomyces chevalieri* et une levure *Saccharomyces cerevisiae var. boulardii* selon l'une des revendications 1 à 3, et au moins un améliorant de boulangerie choisi parmi les enzymes de boulangerie, les agents d'oxydation, les émulsifiants, les matières grasses, les agents réducteurs, les sucres fermentescibles.

9. Composition selon la revendication 8, **caractérisée en ce qu'**elle comprend une levure *Saccharomyces bayanus.*

10. Composition selon l'une des revendications 8 ou 9, **caractérisée en ce que** la levure est comprise en une quantité comprise entre 0,5 et 10% en poids, et de préférence entre 0,5 et 3% en poids, par rapport au poids total de la composition ; et / ou **en ce que** la levure se présente sous forme sèche instantanée ou sèche active.

11. Composition selon la revendication 8, **caractérisée en ce que** l'améliorant est présent en une quantité comprise entre 0,5 et 5% en poids, et de préférence entre 1 et 3% en poids, par rapport au poids total de la composition.

12. Composition selon la revendication 8, **caractérisée en ce qu'**elle comprend en plus au moins un sucre fermentescible, de préférence présent en une quantité comprise entre 0 et 3% en poids, et de manière plus particulièrement préférée entre 0 et 2% en poids, par rapport au poids total de la composition.

13. Procédé de préparation d'un produit cuit ou frit à partir d'une composition de pâte boulangère selon l'une des revendications 8 à 12 consistant à :
- former une pâte en mélangeant la farine, l'eau, la levure, éventuellement au moins un améliorant de boulangerie choisi parmi les enzymes de boulangerie, les agents d'oxydation, les émulsifiants, les matières grasses, les agents réducteurs, les sucres fermentescibles, et entre 0,5% et 10% en poids de levure *Saccharomyces chevalieri* et *Saccharomyces cerevisiae var. boulordii,*
- à faire fermenter la composition de pâte boulangère à une température comprise entre 15° et 45 °C pour obtenir une pâte fermentée ayant un volume spécifique d'au moins 1 ml/g, et
- faire cuire ou refroidir la composition fermentée.

14. Procédé selon la revendication 13, **caractérisé en ce que** la levure est incorporée dans la pâte à une concentration d'au moins 10⁶ cellules par gramme de composition de pâte.

15. Procédé selon l'une des revendications 13 ou 14, **caractérisé en ce qu'**il comprend en outre de la levure *Saccharomyces bayanus.*

## Patentansprüche

1. Verwendung der Hefe *Saccharomyces cerevisiae var. boulardii* oder Verwendung der Hefe *Saccharomyces chevalieri* und der Hefe *Saccharomyces cerevisiae var. boulardii,* um die Fermentation während der Gärungsphase eines fermentierten Backteigs zu stabilisieren.

2. Verwendung gemäß Anspruch 1, **dadurch gekennzeichnet, dass** die Hefe aus dem Stamm *Saccharomyces chevalieri* erhalten wird, der bei der Sammlung "National Collection of Yeast Cultures" unter der Referenz NCYC 935 hinterlegt ist.

3. Verwendung gemäß Anspruch 1, **dadurch gekennzeichnet, dass** die Hefe aus dem Stamm *Saccharomyces cerevisiae var. boulardii* erhalten wird, der am 21. August 2007 bei der Sammlung "Collection Nationale de Cultures de Microorganismes" unter der Referenz CNCM I-3799 hinterlegt wurde.

4. Verwendung gemäß Anspruch 1, **dadurch gekennzeichnet, dass** sie *Saccharomyces bayanus*-Hefe umfasst.

5. Verwendung gemäß Anspruch 1, **dadurch gekennzeichnet, dass** sie mindestens einen Backverbesserer, ausgewählt aus Backenzymen, Oxidationsmitteln, Emulgatoren, Fetten, Reduktionsmitteln, vergärbaren Zuckern umfasst.

6. Verwendung gemäß Anspruch 1, **dadurch gekennzeichnet, dass** die Hefe in Form von Instant-Trockenhefe oder aktiver Trockenhefe vorliegt.

7. Verwendung gemäß Anspruch 1, **dadurch gekennzeichnet, dass** sie weiterhin mindestens einen vergärbaren Zucker umfasst.

8. Backteig-Zusammensetzung, umfassend eine Hefe *Saccharomyces chevalieri* und eine Hefe *Saccharomyces cerevisiae var. boulardii* gemäß einem der Ansprüche 1 bis 3 und mindestens ein Backhilfsmittel, ausgewählt aus Backenzymen, Oxidationsmitteln, Emulgatoren, Fetten, Reduktionsmitteln, vergärbaren Zuckern.

9. Zusammensetzung gemäß Anspruch 8, **dadurch gekennzeichnet, dass** sie eine *Saccharomyces bayanus*-Hefe umfasst.

10. Zusammensetzung gemäß einem der Ansprüche 8 oder 9, **dadurch gekennzeichnet, dass** die Hefe in einer Menge zwischen 0,5 und 10 Gewichts-% und bevorzugt zwischen 0,5 und 3 Gewichts-%, bezogen auf das Gesamtgewicht der Zusammensetzung, enthalten ist; und/oder dadurch, dass die Hefe in Form von Instant-Trockenhefe oder aktiver Trockenhefe vorliegt.

11. Zusammensetzung gemäß Anspruch 8, **dadurch gekennzeichnet, dass** das Hilfsmittel in einer Menge zwischen 0,5 und 5 Gewichts-% und bevorzugt zwischen 1 und 3 Gewichts-%, bezogen auf das Gesamtgewicht der Zusammensetzung, vorliegt.

12. Zusammensetzung gemäß Anspruch 8, **dadurch gekennzeichnet, dass** das sie weiterhin mindestens einen vergärbaren Zucker umfasst, welcher bevorzugt in einer Menge zwischen 0 und 3 Gewichts-% und stärker bevorzugt zwischen 0 und 2 Gewichts-%, bezogen auf das Gesamtgewicht der Zusammensetzung, vorliegt.

13. Verfahren zur Herstellung eines gebackenen oder frittierten Produkts aus einer Backteig-Zusammensetzung gemäß einem der Ansprüche 8 bis 12, bestehend aus:
- dem Formen eines Teigs durch Mischen von Mehl, Wasser, Hefe, gegebenenfalls mindestens einem Backhilfsmittel, ausgewählt aus Backenzymen, Oxidationsmitteln, Emulgatoren, Fetten, Reduktionsmitteln, vergärbaren Zuckern, und zwischen 0,5 Gewichts-% und 10 Gewichts-% der Hefe *Saccharomyces chevalieri* und *Saccharomyces cerevisiae var. boulardii,*
- dem Fermentieren der Backteig-Zusammensetzung bei einer Temperatur zwischen 15° und 45°C, um einen fermentierten Teig zu erhalten, welcher ein spezifisches Volumen von mindestens 1 ml/g aufweist, und
- dem Backen oder Abkühlen der fermentierten Zusammensetzung.

14. Verfahren gemäß Anspruch 13, **dadurch gekennzeichnet, dass** die Hefe in einer Konzentration von mindestens 10⁶ Zellen pro Gramm Teig-Zusammensetzung in den Teig eingebracht wird.

15. Verfahren gemäß einem der Ansprüche 13 oder 14, **dadurch gekennzeichnet, dass** es weiterhin *Saccharomyces bayanus*-Hefe umfasst.

## Claims

1. The use of *Saccharomyces cerevisiae var. boulardii* or the use of *Saccharomyces chevalieri* yeast and of *Saccharomyces cerevisiae var. boulardii* yeast for stabilizing fermentation during the proofing phase of a fermented bakery dough.

2. The use according to claim 1, **characterized in that** the yeast is obtained from the *Saccharomyces chevalieri* strain deposited at the « National Collection of Yeast Cultures » under reference NCYC 935.

3. The use according to claim 1, **characterized in that** the yeast is obtained from the *Saccharomyces cerevisiae var. boulardii* strain deposited at the « Collection Nationale de Cultures de Microorganismes» under reference CNCM I-3799 on August 21^{st} 2007.

4. The use according to claim 1, **characterized in that** it comprises *Saccharomyces bayanus* yeast.

5. The use according to claim 1, **characterized in that** it comprises at least one baking enhancer selected from bakery enzymes, oxidation agents, emulsifiers, fats, reducing agents, fermentable sugars.

6. The use according to claim 1, **characterized in that** the yeast appears in an instantaneous dry or active dry form.

7. The use according to claim 1, **characterized in that** it further comprises at least one fermentable sugar.

8. A bakery dough composition comprising *Saccharomyces chevalieri* yeast and *Saccharomyces cerevisiae var. boulardii* yeast according to any of claims 1 to 3, and at least one baking enhancer selected from bakery enzymes, oxidation agents, emulsifiers, fats, reducing agents, fermentable sugars.

9. The composition according to claim 8, **characterized in that** it comprises *Saccharomyces bayanus* yeast.

10. The composition according to one of claims 8 or 9, **characterized in that** the yeast is comprised in an amount comprised between 0.5 and 10% by weight and preferably between 0.5 and 3% by weight, based on the total weight of the composition, and/or the yeast appears in an instantaneous dry or active dry form.

11. The composition according to claim 8, **characterized in that** the enhancer is present in an amount comprised between 0.5 and 5% by weight, and preferably between 1 and 3% by weight, based on the total weight of the composition.

12. The composition according to claim 8, **characterized in that** it further comprises at least one fermentable sugar, said fermentable sugar being present, preferably, in an amount comprised between 0 and 3% by weight and more preferably between 0 and 2% by weight, based on the total weight of the composition.

13. A method for preparing a baked or fried product from a bakery dough composition according to one of claims 8 to 12 consisting in:
- forming a dough by mixing the flour, the water, the yeast, optionally at least one baking enhancer selected from bakery enzymes, oxidation agents, emulsifiers, fats, reducing agents, fermentable sugars, and between 0.5% and 10% by weight of *Saccharomyces chevalieri* and *Saccharomyces cerevisiae var. boulardii* yeast,
- fermenting the bakery dough composition at a temperature comprised between 15° and 45°C in order to obtain a fermented dough having a specific volume of at least 1 mL/g, and
- baking or cooling the fermented composition.

14. The method according to claim 13, **characterized in that** the yeast is incorporated into the dough at a concentration of at least 10⁶ cells per gram of dough composition.

15. The method according to one of claims 13 or 14, **characterized in that** it further comprises *Saccharomyces bayanus* yeast.
